# EUROPÄISCHE PATENTSCHRIFT

(11) **EP 4 243 635 B1**
(45) Veröffentlichungstag und Bekanntmachung des Hinweises auf die Patenterteilung: **02.10.2024**
(21) Anmeldenummer: 21801507.1
(22) Anmeldetag: 27.10.2021
(51) Int. Cl.: A24C 5/34, G01N 22/04, A24D 3/02, G01N 22/02

(54) **VERFAHREN UND VORRICHTUNG ZUR ERKENNUNG VON KAPSELFEHLERN IN EINEM FILTER DER TABAKVERARBEITENDEN INDUSTRIE**
METHOD AND DEVICE FOR DETECTING CAPSULE DEFECTS IN A FILTER OF THE TOBACCO PROCESSING INDUSTRY
PROCÉDÉ ET DISPOSITIF DE DÉTECTION DE DÉFAUTS DE CAPSULE DANS UN FILTRE DE L'INDUSTRIE DU TRAITEMENT DU TABAC

(30) Priorität: 11.11.2020 DE 102020129732
(43) Veröffentlichungstag der Anmeldung: 20.09.2023
(73) Patentinhaber: TEWS Elektronik GmbH & Co. KG, 22459 Hamburg (DE)
(72) Erfinder: SCHLEMM, Udo, 22607 Hamburg (DE); EGGERS, Jörn, 25451 Quickborn (DE)
(74) Vertreter: Hauck Patentanwaltspartnerschaft mbB
(86) Internationale Anmeldenummer: PCT/EP2021/079812
(87) Internationale Veröffentlichungsnummer: WO 2022/101010

(56) Entgegenhaltungen:
- EP-A1- 2 796 061
- EP-A1- 2 873 334
- EP-A2- 2 207 027
- EP-A2- 2 243 385
- EP-A2- 2 249 670
- EP-B1- 2 249 670
- IT-A1- BO20 120 394

## Beschreibung

Die vorliegende Erfindung betrifft ein Verfahren und eine Vorrichtung zur Erkennung von Kapselfehlern in einem Filter der tabakverarbeitenden Industrie.

Filter der tabakverarbeitenden Industrie können als Filterstrang, geschnittene Filterstäbe oder als mit einer Zigarette verbundenes Filterstück vorliegen. Aus geschmacklichen Gründen werden in den Filter Kapseln mit Aromastoffen eingearbeitet, die direkt vor dem Rauchen der Zigarette in dem Filter zerdrückt werden und so ihre Aromastoffe in dem Filter freisetzen. Ein weit verbreiteter Aromastoff ist beispielsweise Menthol. Der Vorteil bei der Verwendung eines solchen Filters mit einer oder mehreren eingearbeiteten Kapseln besteht darin, dass die Aromastoffe sich bereits in dem Filter befinden und nicht zusammen mit dem Tabak verbrannt werden, sondern unverbrannt dem Tabakrauch zugesetzt werden. Die Bildung von gesundheitsschädlichen Substanzen durch die Verbrennung der Aromastoffe kann so vermieden werden. Ebenso kann eine Veränderung des Aromas durch das Verbrennen mit dem Tabak ausgeschlossen werden.

Verschiedene Parameter der Kapseln können mit geeigneten Sensorsystemen bei der Herstellung und/oder bei der Prüfung des fertigen Produkts gemessen und in ihrer Qualität überwacht werden. Die hierbei interessierenden Parameter für die Kapseln sind beispielsweise ihre Position und ihr Abstand in dem Filter sowie ihr Zustand, also ob die Kapseln intakt oder beschädigt sind.

Aus EP 2 249 670 sind verschiedene Sensorsysteme zur Inspektion von Kapseln bekannt geworden, die den Zustand und das Vorhandensein der Kapsel im Filterstrang erfassen können.

Aus EP 2 207 027 ist ein Verfahren zur Messung von Masse oder Dichte und/oder zur Messung der Feuchte bei einer Vielzahl von portionierten Einheiten in einem nichtmetallischen Trägermaterial bekannt geworden. Ein Mikrowellenmessgerät bestehend aus mindestens einem Mikrowellenresonator zur Erzeugung mindestens einer Resonanzmode misst in einem örtlich begrenzten Messbereich. Das Mikrowellenmessgerät misst mindestens eine Kenngröße der Resonanzmode jeweils, wenn nur das Trägermaterial ohne portionierte Einheit sich in dem Messbereich befindet und wenn die portionierte Einheit sich mindestens teilweise in dem Messbereich befindet. Eine Auswerteeinheit subtrahiert die für das Trägermaterial gemessene Größe von den Messwerten für die portionierte Einheit und bestimmt aus mindestens einer Differenz über ein Kennfeld einen Wert für die Feuchte und/oder für die Masse oder Dichte der portionierten Einheit.

In der Praxis zeigen intakte Kapseln im Dichtesignal des Filters ausgeprägte lokale Maxima. Ist die Kapsel zerbrochen, verteilt sich der flüssige Aromastoff zunächst in dem Filter und verdunstet anschließend. An der Position der Kapsel bleibt deren zerbrochene Kapselhülse zurück. Je nach Größe und Beschaffenheit der Kapsel und ihrer Hülle, sowie abhängig von dem Grad ihrer Zerstörung, führt die zurückgebliebene Kapselhülse zu einem oder mehreren Dichtesignalen. Über die Amplitude des Dichtesignals ist es zuverlässig möglich, fehlerhafte Kapseln in dem Filter zu erkennen. Der Filter kann so bei einer fehlerhaften Kapsel aus der Produktion aussortiert werden. Nicht möglich ist es jedoch, zuverlässig zu unterscheiden, ob eine Kapsel fehlt oder ob die Kapsel bereits zerstört ist. Es können also nicht die Kapselfehler für eine fehlende und eine zerstörte Kapsel zuverlässig voneinander unterschieden werden. Es besteht daher das technische Bedürfnis zusätzliche Informationen über die Kapsel und Kapselfehler im Filter zuverlässig bei geringem Aufwand zu gewinnen.

Aus IT BO 20120394 A1 ist ein Verfahren bekannt, mit dem in einem Filter der tabakverarbeitenden Industrie unterschieden werden kann, ob eine Kapsel fehlt oder ob die Kapsel bereits zerstört worden ist. Hierzu werden zwei aufgezeichnete Profile des Filtermaterials miteinander verglichen und mit statistischen Methoden Schwellenwerte für die Erkennung einer Kapsel und die Erkennung von ausgetretener Feuchte in dem Filtermaterial festgelegt.

Aus EP 28 73 334 A1 ein Verfahren zur Erkennung von Strang-Inhomogenitäten eines Materialstrangs der tabakverarbeitenden Industrie bekannt geworden. Hierzu werden bei zwei unterschiedlichen Messefrequenzen jeweils zwei miteinander zu vergleichende Messgrößen ermittelt. Für diese Messgrößen sind Toleranzbereiche definiert, die nicht mehr tolerierbare Strang-Inhomogenitäten anzeigen.

Der Erfindung liegt die Aufgabe zu Grunde, ein Verfahren und eine Vorrichtung bereit zu stellen, die zuverlässig eine genaue Auswertung der Messsignale zu einem Kapselfehler für einen Filter der tabakverarbeitenden Industrie gestatten.

Erfindungsgemäß wird die Aufgabe durch ein Verfahren mit den Merkmalen aus Anspruch 1 und durch eine Vorrichtung mit den Merkmalen aus Anspruch 13 gelöst. Vorteilhafte Ausgestaltungen bilden die Gegenstände der Unteransprüche.

Das erfindungsgemäße Verfahren zur Erkennung von Kapselfehlern in einem Filterstrang der tabakverarbeitenden Industrie verwendet ein Mikrowellenmessgerät, das die Dichte und/oder Feuchte eines Filters entlang seiner Längsrichtung misst.

In einem ersten Verfahrensschritt wird in einem bestimmten Bereich der Messprofile der Maximalwert der gemessenen Werte mit einem Schwellwert verglichen. Die gemessenen Werte sind hierbei indikativ für die Dichte und/oder Feuchte, was bedeutet, dass aus diesen direkt oder unter Zuhilfenahme weiterer Größen die Werte für Dichte und/oder Feuchte bestimmt werden können. Bei Unterschreiten des Schwellwerts wird ein Kapselfehler in dem Filter erkannt. Für eine genaue Analyse des Kapselfehlers wird ein Schwankungsmaß für die Dichte und/oder Feuchte in einem Bereich vor und/oder hinter einer Messstelle erfasst. Als Messstellen werden hierbei Bereiche um die Soll-Positionen der Kapseln genommen. In einem zweiten Vergleichsschritt wird der für den Bereich ermittelte Wert für das Schwankungsmaß mit einem Kapselschwellwert für die gemessenen Werte verglichen. Bei einem Überschreiten des Kapselschwellwerts wird eine gebrochene Kapsel erkannt. Bei Gleichheit oder Unterschreiten des Kapselschwellwerts wird eine fehlende Kapsel im Filter erkannt. Jeweils wird der Wert für das Schwankungsmaß mit dem Kapselschwellwert verglichen. Die Auswahl der Messstellen ist gerade für die Erkennung einer fehlenden Kapsel besonders relevant. Nur wenn eine Kapsel da sein sollte, kann eine fehlende Kapsel als Fehler erkannt werden. Als Messstellen werden daher Soll-Positionen oder erwartete Positionen gewählt.

Die Erfindung beruht auf der Beobachtung, dass eine zerbrochene Kapsel Schwankungen in den Messsignalen erhöht und daher zu einem größeren Wert im Schwankungsmaß führt, als der reine Filter, dem die Kapsel fehlt und der ohne Reste der zerbrochenen Kapsel und/oder des ausgelaufenen Aromastoffs eine gleichmäßige Dichte und damit ein geringes Schwankungsmaß der Messsignale zeigt. Indem der zweite Vergleich nicht auf die Messsignale für Dichte und/oder Feuchte selbst abstellt, sondern auf deren Schwankungsmaß im Bereich des Kapselfehlers, werden mit geringem technischem Aufwand zuverlässig Informationen zu dem Zustand der Kapsel gewonnen.

In einer bevorzugten Weiterbildung werden für die gemessenen Werte in einem um die Messstelle liegenden Anpassungsbereich eine Ausgleichsgerade bestimmt und das Schwankungsmaß relativ zu der Ausgleichsgerade bestimmt. Der Anpassungsbereich kann beispielsweise einen vorbestimmten Abstand vor und hinter der Messstelle besitzen. Bevorzugt wird die Ausgleichsgerade durch lineare Regression der Messwerte in dem Anpassungsbereich gebildet. Die Verwendung einer Ausgleichsgeraden beruht auf der Einsicht, dass Feuchte- und Dichteschwankungen, die nicht durch die Kapsel oder deren Inhalt verursacht sind, sich örtlich langsamer ändern und daher durch eine lineare Regression gut abgebildet werden können.

In einer bevorzugten Weiterbildung ist das Mikrowellenmessgerät als ein Mikrowellenresonator ausgebildet, der mindestens eine Veränderung der Resonanzbreite und/oder eine Verschiebung der Resonanzfrequenz misst. Durch den Filter mit oder ohne eingebrachte Kapsel ändern sich die dielektrischen Eigenschaften in dem Mikrowellenresonator. Dies führt zu einer Verbreiterung der Resonanzkurve und zu einer Verschiebung deren Resonanzfrequenz. Bei der Auswertung der Messsignale des Mikrowellenmessgeräts kann eine Veränderung der Breite der Resonanzkurve und eine Verschiebung der Resonanzfrequenz als ein Feuchte- und ein Dichtewert ausgewertet werden. Bei der Auswertung der Signale wird die Veränderung der Resonanzkurve in der Regel gegenüber dem leeren Resonator erfasst. Es ist auch möglich, ein geeignetes Mikrowellenmessgerät mit zwei oder mehr Resonanzmoden zu betreiben und die Veränderung der Signale zwischen den unterschiedlichen Resonanzmoden auszuwerten. Allgemein genügt es für das erfindungsgemäße Verfahren, Werte für Dichtesignale und/oder Feuchtesignale zu messen und ihre Variationen nach dem Schwankungsmaß in einem räumlichen Bereich zu bestimmen.

In einer bevorzugten Weiterbildung des erfindungsgemäßen Verfahrens wird der Wert für das Schwankungsmaß für einen vorbestimmten Streckenabschnitt entlang der Längsrichtung des Filters bestimmt. Die Streckenabschnitte dieser Weiterbildung müssen mit den erwarteten Soll-Positionen für die Kapseln abgestimmt sein. Der vorbestimmte Streckenabschnitt kann beispielsweise vor und/oder hinter der Sollposition der Kapsel liegen, für die die gemessenen Maxima für Dichte und/oder Feuchte unterhalb des Schwellwerts liegen. Auch kann der vorbestimmte Streckenabschnitt beispielsweise mit dem Anpassungsbereich für die Ausgleichgerade zusammenfallen.

In einer bevorzugten Ausgestaltung des Verfahrens sind die Positionen, in denen die Kapseln entlang der Längsrichtung erwartet werden, vorbestimmt. Dies kann sich beispielsweise aus dem Herstellungsprozess des Kapselfilterstrangs selbst ergeben, beispielsweise indem beginnend mit einer Startposition in vorbestimmten Abständen Kapseln in den Filter einbracht werden. Die vorbestimmte Position kann beispielsweise auch mithilfe eines vorgegebenen Abstandes zwischen den Kapseln bestimmt werden, indem beispielsweise mit Überschreiten eines Schwellwerts das Vorhandensein einer Kapsel gemessen und von dort aus über gegebene Abstandswerte die erwarteten Positionen für weitere Kapseln bestimmt werden. Bei der Herstellung des Kapselfilterstrangs in der Produktionsmaschine ist es wichtig, dass die Positionen der Kapseln im endlosen Kapselfilterstrang relativ zum Messer, das den Strang in einzelne Filterstäbe teilt, korrekt ist.

In einer zweckmäßigen Weiterführung des Verfahrens kann der Wert für das Schwankungsmaß jeweils in einem Bereich vor und/oder hinter der erwarteten Kapsel-Position bestimmt werden. Bei diesem Ansatz werden die Werte für das Schwankungsmaß fortlaufend berechnet, unabhängig davon, ob die gemessenen Werte für Dichte und/oder Feuchte den Schwellwert unterschritten haben oder nicht. Die Auswertung der Standardabweichung erfolgt, dann bei Unterschreiten des Schwellwerts auch für einen zurückliegenden Streckenabschnitt.

In einer bevorzugten Ausgestaltung, handelt es sich bei dem Filter um einen in seiner Längsrichtung transportierten Filterstab. Der Filterstab wird aus Filtertow hergestellt und vor seinem Schneiden in einem Stück transportiert. Die Prüfung des Filterstabes kann am endlosen Strang erfolgen, oder/und nach dem Schneiden des Filterstrangs in einzelne Filterstäbe. Das erfindungsgemäße Verfahren kann aber nicht nur bei der Herstellung eingesetzt werden, sondern auch zur Prüfung von fertig hergestellten Zigaretten eingesetzt werden. Hierbei ist der zu vermessene Filter das in seiner Längsrichtung transportierte Filterstück der Zigarette.

Die Vermessung und Überprüfung des fertigen Filterstücks an einer Zigarette erfolgt bevorzugt in einer Teststation, kann aber grundsätzlich auch im Rahmen des Herstellungsprozesses für die Zigarette erfolgen.

Bei dem erfindungsgemäßen Verfahren haben Versuche ergeben, dass das Material der Kapsel und des Filters ebenso wie der Feuchtegehalt des Filters keinen nennenswerten Einfluss auf den Kapselschwellwert besitzen, so dass auch unabhängig von diesen der Kapselschwellwert bestimmt werden kann und bei einer Änderung des Kapselmaterials oder des Filters nicht angepasst werden muss.

Bevorzugt wird der Wert für das Schwankungsmaß als Standardabweichung bestimmt.

Die erfindungsgemäße Aufgabe wird ebenfalls durch eine Vorrichtung mit den Merkmalen aus Anspruch 13 gelöst. Die Vorrichtung dient zur Messung von Kapselfehlern in einem Filter der tabakverarbeitenden Industrie. Die Vorrichtung weist eine Mikrowellenmesseinrichtung und eine Steuerung auf, wobei die Steuerung auch Teil der Mikrowellenmesseinrichtung sein kann. Die Mikrowellenmesseinrichtung misst Werte, die indikativ für die Dichte und/oder die Feuchte in dem Filter sind, wobei die Steuerung dazu ausgebildet ist, die gemessenen Werte mit einem Schwellwert zu vergleichen und bei Unterschreiten des Schwellwerts einen Kapselfehler zu erkennen. Wie bereits bei dem erfindungsgemäßen Verfahren ist die Steuerung ferner dazu ausgebildet, über einen Vergleich des Werts für das Schwankungsmaß mit einem Kapselschwellwert, eine zerstörte Kapsel von einer fehlenden Kapsel zuverlässig zu unterscheiden. Bevorzugt ist die Vorrichtung ein Teil einer Filterstab-Teststation. Ebenfalls kann die Vorrichtung Teil einer Vorrichtung zur Herstellung von Filtern sein, beispielsweise einer Filterstabmaschine oder einer Maschine, die verschiedene Filterstücke zu Kombinationsfiltern zusammensetzt (Filterstab-Combiner). Die Vorrichtung kann außerdem Teil einer Vorrichtung zur Herstellung von Zigaretten sein, beispielsweise einer Zigarettenmaschine.

Bevorzugt ist die Steuerung dazu ausgebildet als Wert für das Schwankungsmaß eine Standardabweichung zu bestimmen.

Die vorliegende Erfindung wird anhand der nachstehenden Figuren näher erläutert. Es zeigen:
- Fig. 1: ein Dichtesignal über der Position in einem Filterstrang für eine intakte und eine zerbrochene Kapsel,
- Fig. 2: zusätzlich das Dichtesignal für eine fehlende Kapsel,
- Fig. 3: das Dichtesignal in einem Filterstab mit vier Kapseln,
- Fig. 4: die Werte für die Standardabweichung bei zerbrochenen Kapseln und bei fehlenden Kapseln und
- Fig. 5: gemessene Dichtewerte für intakte und zerbrochene Kapseln sowie eine Ausgleichgerade bei einer fehlenden Kapsel.

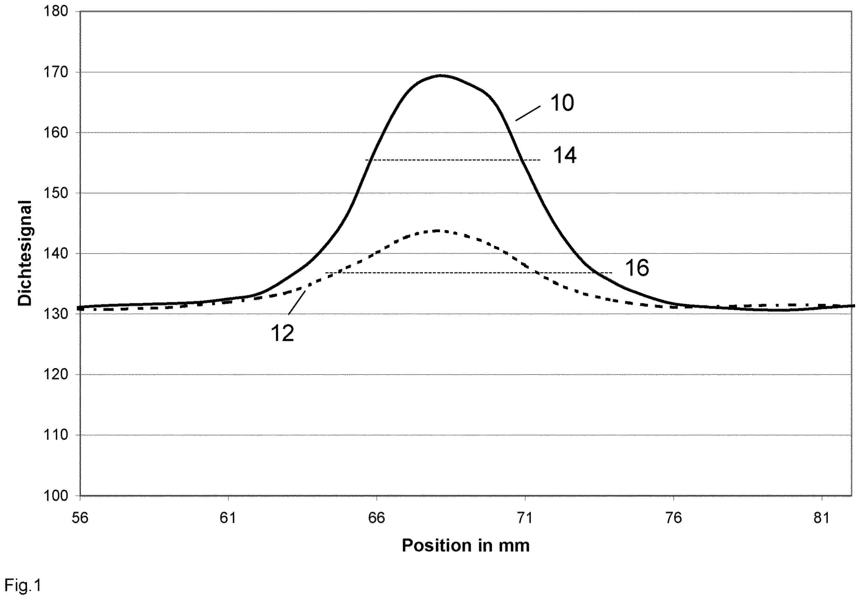

Fig. 1 zeigt in einem Diagramm den gemessenen Dichtewert (dimensionslos aufgetragen) in Abhängigkeit von einer Position in Millimeter für einen Filterstab. Es sind zwei Messkurven eingezeichnet, wobei die durchgehende Messkurve 10 die gemessenen Dichtewerte für einen Filterstrang mit einer intakten Kapsel zeigt und die Messkurve 12 die Messwerte für die Dichte bei einer gebrochenen Kapsel. Deutlich zu erkennen ist, dass im Bereich von 56 mm bis ungefähr 61-62 mm und ab 76 mm die beiden Messkurven gleiche Dichtewerte zeigen. In dem dazwischenliegenden Bereich führt die intakte Kapsel zu deutlich größeren Messwerten, die bis 170 steigen. Die Messwerte der gebrochenen Kapsel steigen auf Werte leicht über 140 an.

Durch einen oberen Schwellwert 14, der einen Wert von ungefähr 158 besitzt, können in dem Filterstrang die intakten Kapseln zuverlässig erkannt werden. Die Messwerte der Kurve 10 übersteigen deutlich den oberen Schwellwert 14, so dass zuverlässig eine intakte Kapsel erkannt wird. Fig. 1 zeigt zudem einen unteren Schwellwert 16, der einen Wert von knapp unter 140 besitzt. In dem dargestellten Beispiel kann mit dem unteren Schwellwert 16 das Signal für die gebrochene Kapsel diskriminiert werden.

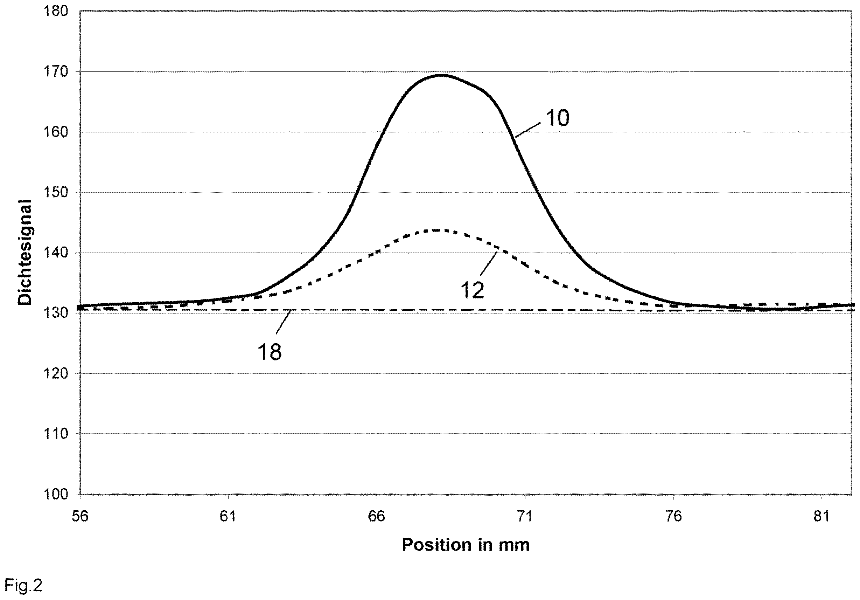

Das in Fig. 1 dargestellte Verfahren wäre grundsätzlich auch geeignet, die Situation mit einer fehlenden Kapsel zu erkennen. Fig. 2 zeigt den Verlauf 18 bei einer fehlenden Kapsel im Filterstrang. Die in Fig. 1 dargestellten Schwellwerte 14 und 16 wären auch in der Lage, zwischen einer gebrochenen Kapsel und einer fehlenden Kapsel zu unterscheiden.

Das vorstehend skizzierte Verfahren besitzt jedoch für die Praxis eine Reihe von gravierenden Nachteilen. Insbesondere bei der Verwendung von kleinen Kapseln ist der Unterschied der Signale zwischen fehlender Kapsel und zerbrochener Kapsel nicht sehr groß. Es ist also keine zuverlässige Unterscheidung zwischen diesen Kapselfehlern möglich. Weiterhin treten bei praktischer Verwendung auch Fälle auf, in denen die Kapsel in verschiedene Stücke zerbricht, so dass statt eines Maximums verschiedene, schwach ausgeprägte, lokale Maxima in den Signalen auftreten. Hier ist es nicht möglich, zwischen fehlender und zerbrochener Kapsel zu unterscheiden. Der messtechnisch besonders stark ins Gewicht fallende Nachteil liegt darin, dass bei beiden Schwellwertvergleichen auf die Absolutwerte der gemessenen Signale abgestellt wird. Diese Absolutwerte variieren sehr stark mit den Umgebungsbedingungen, insbesondere den Feuchtewerten. Ändert sich der Feuchtegehalt im Filtertow, so ändern sich die Absolutwerte stark, und es kann nicht mit denselben Schwellwerten wie bei einem trockenen Filtertow gearbeitet werden. Dies verhindert den praktischen Einsatz des Messverfahrens mit zwei Schwellwerten und erlaubt keine zuverlässige Unterscheidung der Kapselfehler für fehlende und zerbrochene Kapseln.

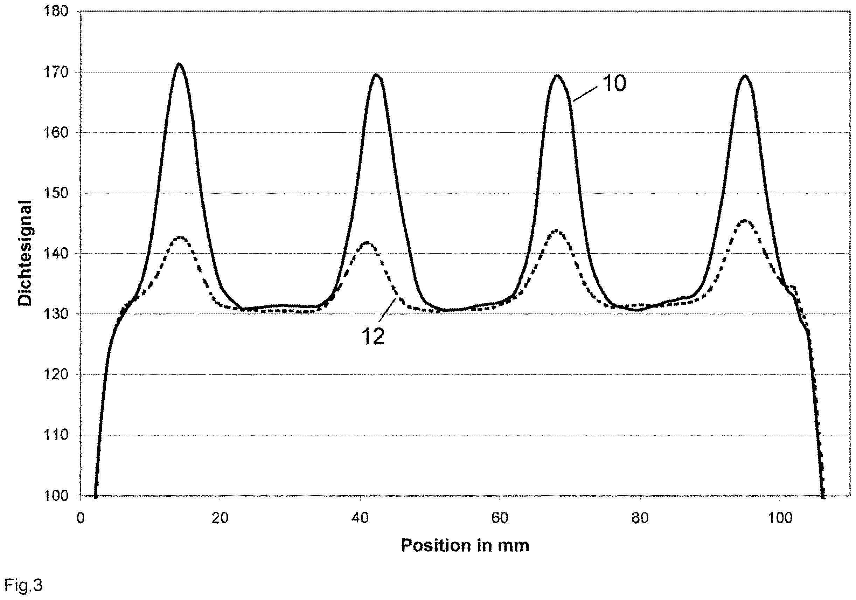

Fig. 3 zeigt die gemessenen Dichtesignale für vier in einem Filterstab befindliche Kapseln, jeweils mit intakten Kapseln und mit zerbrochenen Kapseln. Es handelt sich hierbei um einen bereits geschnittenen Filterstab, der vier Einzelfilter aufweist.

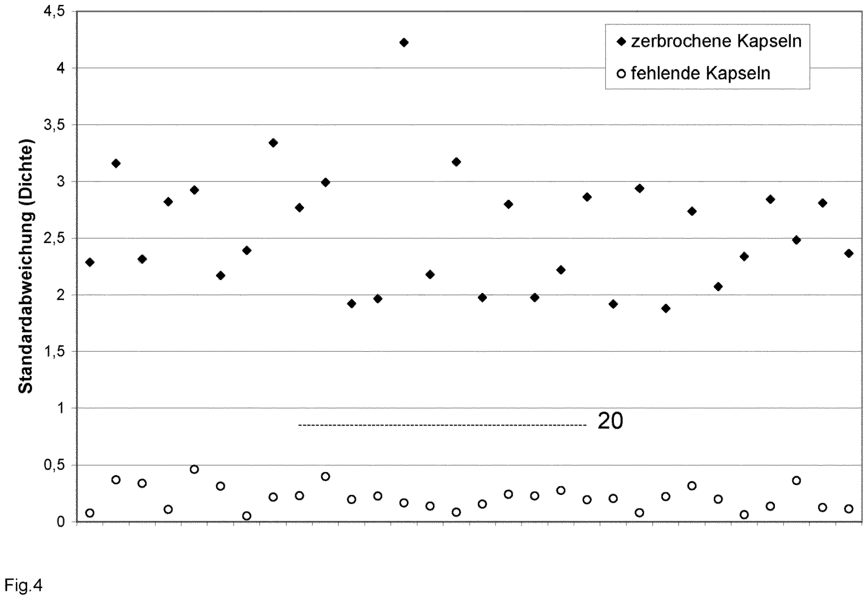

Bei dem erfindungsgemäßen Verfahren wird bei Unterschreiten des Schwellwerts für das gemessene Signal ein umliegender Bereich als Bereich mit einem Kapselfehler erkannt. In dem umliegenden Bereich wird die Standardabweichung der gemessenen Signale berechnet, beispielsweise in einem Bereich von +/- 10 mm, bevorzugt +/- 5 mm. Fig. 4 zeigt die gemessenen Standardabweichungen für die gemessenen Signale. Hierbei wird die Standardabweichung für jedes Signal gemessen, unabhängig davon, ob das gemessene Signal den Schwellwert unterschritten hat oder nicht. Aus Fig. 4 zu erkennen ist, dass die bestimmten Standardabweichungen für die Signale mit gebrochener Kapsel deutlich größer sind als die Standardabweichungen der Signale bei fehlender Kapsel. Durch die Verwendung des Kapselschwellwerts 20 für die Standardabweichung, können so die beiden Kapselfehler zuverlässig voneinander unterschieden werden. Der besondere Vorteil hierbei ist auch, dass, wenn sich die Umgebungsbedingungen und/oder der Materialzusammensetzung und Beschaffenheit, wie beispielsweise der Feuchte des Filtertow ändern, die Werte für die Standardabweichung sich nicht ändern. Dies bedeutet, der Kapselschwellwert 20 kann einheitlich bei unterschiedlichsten
Anwendungen verwendet werden. Auch kleine Kapseln verhindern nicht eine zuverlässige Unterscheidung der beiden Kapselfehler.

Insgesamt hat die Verwendung der Standardabweichung eine Reihe von Vorteilen: Besonders für kleinere Kapseln ist eine größere relative Differenz zwischen den Signalen von zerbrochenen und fehlenden Kapseln festzustellen. Die Unterscheidung der Schadensbilder kann somit mit höherer Präzision erfolgen. Zudem ist die Unterscheidung zwischen zerbrochener und fehlender Kapsel nicht von den Absolutwerten abhängig und kann so unabhängig von Filtertow-Dichte- und Feuchtegehalt verwendet werden.

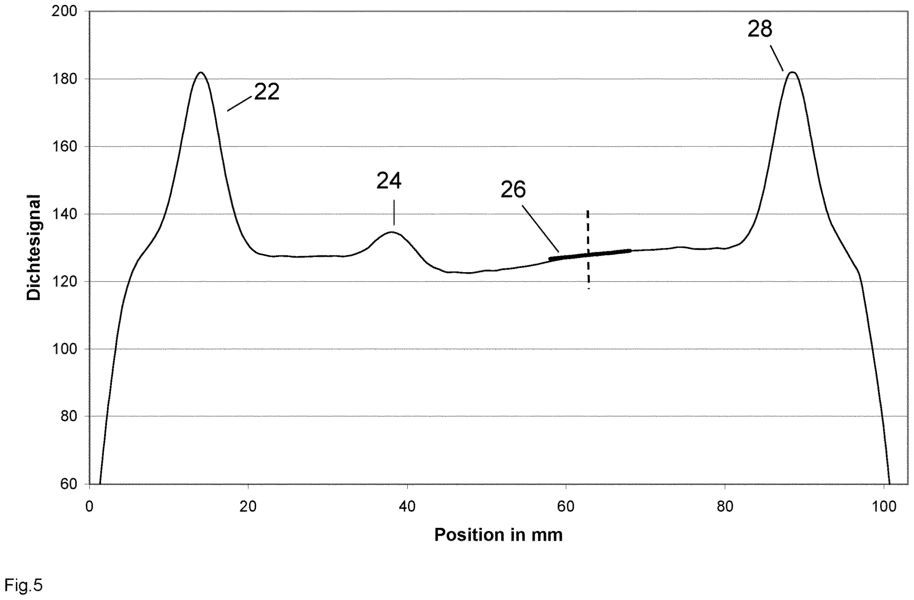

Fig. 5 zeigt die gemessene Dichte des Filtertows. Mit den Signalwerten 22 und 28 werden zwei Maxima für die Dichtewerte gezeigt. Die Maxima 22 und 28 weisen auf das Vorliegen von intakten Kapseln hin. Der Signalwert 24 weist mit seinem niedrigeren Wert auf eine zerbrochene Kapsel hin.

Mit der Berechnung der Standardabweichung relativ zu dem Mittelwert der Dichte des Filtertows kann eine fehlende Kapsel gut erkannt werden, insbesondre bei einer homogenen Dichte des Filtertows des Filters. Bei einer inhomogenen Dichte des Filtertows ist die auf den Mittelwert bezogene Standardabweichung jedoch erhöht und nur eingeschränkt zur Detektion fehlender Kapseln geeignet. In einer vorteilhaften Weiterbildung wird mit einer linearen Regression eine Ausgleichgerade für die Meßpunkte im Bereich um die Sollposition bestimmt. Die Ausgleichsgerade 26 zeigt beispielsweise eine Tendenz in der Dichte des Filtertows an. Das Schwankungsmaß der Meßwerte relativ zu der Ausgleichsgeraden ist hierbei ein geeignetes Kriterium zur Unterscheidung von zerbrochenen und fehlenden Kapseln.

Fig. 5 zeigt einen Filterstab von 100 mm Länge, der 4 Kapseln enthalten sollte. Zwei der Kapseln in den Positionen 22 und 28 sind intakt, eine Kapsel in Position 24 ist zerbrochen und eine in Position 26 fehlt. Die Dichte des Filtertows im Bereich zwischen ca. 50 mm und 80 mm ist inhomogen und nimmt in diesem Bereich monoton zu. Die Standardabweichung der Dichte bezüglich des Dichtemittelwerts wäre in diesem Bereich erhöht, obwohl keine zerbrochene Kapsel vorliegt. Im Bild ist ebenfalls eine Ausgleichgerade 26 um die Sollkapselposition zu sehen (+/- 5 mm). Das Schwankungsmaß der Meßwerte gegenüber dieser Ausgleichgeraden ist niedrig. Hintergrund hierfür ist, dass bei Vorliegen einer zerbrochenen Kapsel nichtmonotone Signalabweichungen auftreten würden, die das Schwankungsmaß der Meßwerte auch gegenüber der Ausgleichgeraden erhöhen würden.

## Patentansprüche

1. Verfahren zur Erkennung von Kapselfehlern in einem Filter der tabakverarbeitenden Industrie, bei dem ein Mikrowellenmessgerät für eine Dichte und/oder Feuchte des Filters indikative Werte entlang seiner Längsrichtung misst, wobei das Verfahren die folgenden Schritte aufweist:
a. Vergleichen gemessener Werte mit einem Schwellwert, wobei bei Unterschreiten des Schwellwerts ein Kapselfehler in dem Filter vorliegt und
b. Bestimmen eines Werts für ein Schwankungsmaß der gemessenen Werte in einem Bereich vor und/oder hinter einer Messstelle, in der mindestens ein Messwert den Schwellwert unterschreitet,
**dadurch gekennzeichnet, dass** das Verfahren ferner den folgenden Schritt aufweist:
c. Vergleichen des Werts für das Schwankungsmaß mit einem vorbestimmten Kapselschwellwert, wobei
i. bei einem Überschreiten des Kapselschwellwerts eine gebrochene Kapsel vorliegt und
ii. bei einem Unterschreiten des Kapselschwellwerts eine fehlende Kapsel vorliegt.

2. Verfahren nach Anspruch 1, **dadurch gekennzeichnet, dass** für die gemessenen Werte in einem um die Messstelle liegenden Anpassungsbereich eine Ausgleichsgerade bestimmt wird und das Schwankungsmaß relativ zu der Ausgleichsgerade bestimmt wird.

3. Verfahren nach Anspruch 1 oder 2, **dadurch gekennzeichnet, dass** eine Maximumssuche in der Umgebung der Messstelle erfolgt.

4. Verfahren nach einem der Ansprüche 1 bis 3, **dadurch gekennzeichnet, dass** das Mikrowellenmessgerät als ein Mikrowellenresonator ausgebildet ist, für den mindestens eine Veränderung der Breite seiner Resonanzkurve und /oder eine Verschiebung seiner Resonanzfrequenz gemessen wird.

5. Verfahren nach einem der Ansprüche 1 bis 4, **dadurch gekennzeichnet, dass** das Mikrowellenmessgerät als ein Mikrowellenresonator ausgebildet ist, der ein Dichtesignal und/oder ein Feuchtesignal misst.

6. Verfahren nach einem der Ansprüche 1 bis 5, **dadurch gekennzeichnet, dass** der Wert für das Schwankungsmaß für eine vorbestimmte Länge des Bereichs in Längsrichtung bestimmt wird.

7. Verfahren nach einem der Ansprüche 1 bis 6, **dadurch gekennzeichnet, dass** die Kapseln in bestimmten Positionen entlang der Längsrichtung erwartet werden.

8. Verfahren nach Anspruch 7, **dadurch gekennzeichnet, dass** der Wert für das Schwankungsmaß jeweils in einem Intervall um die erwartete Position der Kapsel bestimmt wird.

9. Verfahren nach einem der Ansprüche 1 bis 8, **dadurch gekennzeichnet, dass** der Filter als ein in Längsrichtung transportierter Filterstab oder als Filterstrang ausgebildet ist.

10. Verfahren nach einem der Ansprüche 1 bis 8, **dadurch gekennzeichnet, dass** der Filter als ein Filterstück einer in Längsrichtung transportierten Zigarette ausgebildet ist.

11. Verfahren nach einem der Ansprüche 1 bis 10, **dadurch gekennzeichnet, dass** der Kapselschwellwert unabhängig von dem Material der Kapsel und/oder der Art der Füllung der Kapsel ist.

12. Verfahren nach einem der Ansprüche 1 bis 11, **dadurch gekennzeichnet, dass** der Kapselschwellwert unabhängig von dem umgebenden Filtertow ist.

13. Vorrichtung zur Messung von Kapselfehlern in einem Filter der tabakverarbeitenden Industrie, mit einer Mikrowellenmesseinrichtung und einer die gemessenen Werte verarbeitenden Steuerung:
a. Die Mikrowellenmesseinrichtung misst für die Dichte und/oder die Feuchte in dem Filter indikative Werte, wobei die Steuerung dazu ausgebildet ist, die gemessenen Werte mit einem Schwellwert zu vergleichen und bei einem Unterschreiten des Schwellwerts einen Kapselfehler zu erkennen,
b. Die Steuerung ist dazu ausgebildet, einen Wert für ein Schwankungsmaß für die gemessenen Werte in einem Bereich vor und/oder hinter einer Messstelle, in der mindestens ein Messwert den Schwellwert unterschreitet zu bestimmen und den Wert für das Schwankungsmaß mit einem Kapselschwellwert zu vergleichen, wobei
i. bei einem Überschreiten des Kapselschwellwerts eine gebrochene Kapsel und
ii. bei einem Unterschreiten des Kapselschwellwerts ein Fehlen der Kapsel erkannt wird.

14. Filterstabteststation mit einer Vorrichtung nach Anspruch 13.

15. Produktionsmaschine für Zigaretten oder Filter mit einer Vorrichtung nach Anspruch 13.

## Claims

1. A method for detecting capsule defects in a filter of the tobacco processing industry, in which a microwave measuring instrument measures values indicative for a density and/or moisture of the filter along its longitudinal direction, wherein the method comprises the following steps:
a. Comparing of measured values with a threshold value, wherein a capsule fault is present in the filter if the threshold value is undercut, and
b. Determining a value for a fluctuation measure of the measured values in a range before and/or after a measuring point in which at least one measured value falls below the threshold value,
**characterized in that** the method further comprises the following step:
c. comparing the value for the fluctuation measure with a predetermined capsule threshold value, wherein
i. a broken capsule is present if the capsule threshold is exceeded and
ii. an absent capsule is present if the capsule threshold is undercut.

2. Method according to claim 1, **characterized in that** a compensation line is determined for the measured values in an adjustment range arranged around the measuring point and the fluctuation measure is determined relative to the compensation line.

3. Method according to claim 1 or 2, **characterized in that** a maximum search is carried out in the vicinity of the measuring point.

4. Method according to one of claims 1 to 3, **characterized in that** the microwave measuring instrument is designed as a microwave resonator for which at least one of the changes in the width of its resonance curve and/or a shift in its resonance frequency is measured.

5. Method according to one of claims 1 to 4, **characterized in that** the microwave measuring instrument is designed as a microwave resonator which measures a density signal and/or a humidity signal.

6. Method according to one of claims 1 to 5, **characterized in that** the value for the fluctuation measure is determined for a predetermined length of the range in the longitudinal direction.

7. Method according to one of claims 1 to 6, **characterized in that** the capsules are expected in given positions along the longitudinal direction.

8. Method according to claim 7, **characterized in that** the value for the fluctuation measure is determined in each case in an interval around the expected position of the capsule.

9. Method according to one of claims 1 to 8, **characterized in that** the filter is designed as a filter rod or as a filter strand transported in the longitudinal direction.

10. Method according to one of claims 1 to 8, **characterized in that** the filter is designed as a filter piece of a cigarette transported in the longitudinal direction.

11. Method according to one of claims 1 to 10, **characterized in that** the capsule threshold value is independent of the material of the capsule and/or the type of filling of the capsule.

12. Method according to one of claims 1 to 11, **characterized in that** the capsule threshold value is independent of the surrounding filter trough.

13. Device for measuring capsule defects in a filter of the tobacco processing industry, with a microwave measuring device and a controller which processes the measured values:
a. The microwave measuring device measures values indicative for a density and/or moisture in the filter, wherein the controller is designed to compare the measured values with a threshold value and to detect a capsule fault if the threshold value is undercut,
b. The controller is designed to determine a value for a fluctuation measure for the measured values in a range before and/or after a measuring point in which at least one measured value falls below the threshold value and to compare the value for the fluctuation measure with a capsule threshold value, wherein
i. a broken capsule is detected if the capsule threshold is exceeded and
ii. the absence of the capsule is detected if the capsule threshold is undercut.

14. Filter rod test station with a device according to claim 13.

15. Production machine for cigarettes or filters with a device according to claim 13.

## Revendications

1. Procédé de détection de défauts de capsule dans un filtre de l'industrie du traitement du tabac, dans lequel un appareil de mesure à hyperfréquence mesure des valeurs indicatives d'une densité et/ou d'une humidité du filtre le long de sa direction longitudinale, dans lequel le procédé présente les étapes suivantes :
a. comparaison de valeurs mesurées avec une valeur seuil, où un défaut de capsule est présent dans le filtre en cas de valeur inférieure à la valeur seuil et
b. détermination d'une valeur pour un niveau de fluctuation des valeurs mesurées dans une plage avant et/ou après un point de mesure, dans laquelle au moins une valeur mesurée est inférieure à la valeur seuil,
**caractérisé en ce que** le procédé présente en outre l'étape suivante :
c. comparaison de la valeur pour le niveau de fluctuation avec une valeur seuil de capsule prédéterminée, où
i. une capsule est cassée en cas de valeur supérieure à la valeur seuil de capsule et
ii. une capsule est manquante en cas de valeur inférieure à la valeur seuil de capsule.

2. Procédé selon la revendication 1, **caractérisé en ce qu'**une droite de compensation est déterminée pour les valeurs mesurées dans une plage d'adaptation située autour du point de mesure et le niveau de fluctuation est déterminé par rapport à la droite de compensation.

3. Procédé selon la revendication 1 ou 2, **caractérisé en ce qu'**une recherche de maximum est effectuée aux environs du point de mesure.

4. Procédé selon l'une des revendications 1 à 3, **caractérisé en ce que** l'appareil de mesure à hyperfréquence est conçu comme un résonateur à hyperfréquence, pour lequel sont mesurés au moins une modification de la largeur de sa courbe de résonance et/ou un décalage de sa fréquence de résonance.

5. Procédé selon l'une des revendications 1 à 4, **caractérisé en ce que** l'appareil de mesure à hyperfréquence est conçu comme un résonateur à hyperfréquence, lequel mesure un signal de densité et/ou un signal d'humidité.

6. Procédé selon l'une des revendications 1 à 5, **caractérisé en ce que** la valeur pour le niveau de fluctuation est déterminée pour une longueur prédéterminée de la plage dans la direction longitudinale.

7. Procédé selon l'une des revendications 1 à 6, **caractérisé en ce que** les capsules sont attendues à des positions déterminées le long de la direction longitudinale.

8. Procédé selon la revendication 7, **caractérisé en ce que** la valeur pour le niveau de fluctuation est déterminée respectivement dans un intervalle autour de la position attendue de la capsule.

9. Procédé selon l'une des revendications 1 à 8, **caractérisé en ce que** le filtre est conçu comme un bâtonnet filtre ou un boudin de filtres transporté dans la direction longitudinale.

10. Procédé selon l'une des revendications 1 à 8, **caractérisé en ce que** le filtre est conçu comme un bout de filtre d'une cigarette transportée dans la direction longitudinale.

11. Procédé selon l'une des revendications 1 à 10, **caractérisé en ce que** la valeur seuil de capsule est indépendante du matériau de la capsule et/ou du type de remplissage de la capsule.

12. Procédé selon l'une des revendications 1 à 11, **caractérisé en ce que** la valeur seuil de capsule est indépendante de la mèche de filtre située autour.

13. Dispositif de mesure de défauts de capsule dans un filtre de l'industrie de traitement du tabac, comprenant un système de mesure à hyperfréquence et un moyen de commande de traitement des valeurs mesurées :
a. le système de mesure à hyperfréquence mesure des valeurs indicatives de la densité et/ou de l'humidité dans le filtre, le moyen de commande étant conçu pour comparer les valeurs mesurées avec une valeur seuil et pour détecter un défaut de capsule en cas de valeur inférieure à la valeur seuil et,
b. le moyen de commande est conçu pour déterminer une valeur pour un niveau de fluctuation pour les valeurs mesurées dans une plage avant et/ou après un point de mesure, dans laquelle au moins une valeur mesurée est inférieure à la valeur seuil, et pour comparer la valeur pour le niveau de fluctuation avec une valeur seuil de capsule, dans lequel
i. une capsule cassée est détectée en cas de valeur supérieure à la valeur seuil de capsule et
ii. une capsule manquante est détectée en cas de valeur inférieure à la valeur seuil de capsule.

14. Station de test de bâtonnet filtre comprenant un dispositif selon la revendication 13.

15. Machine de production pour cigarettes ou filtres comprenant un dispositif selon la revendication 13.
